Europäisches Patentamt

European Patent Office

Office européen des brevets

(19)

(11) Veröffentlichungsnummer : **0 121 188**
**B1**

(12) **EUROPÄISCHE PATENTSCHRIFT**

(45) Veröffentlichungstag der Patentschrift :
20.09.89

(51) Int. Cl.⁴ : **H 04 L 11/00**

(21) Anmeldenummer : 84103194.1

(22) Anmeldetag : 22.03.84

(54) **Verfahren und Schaltungsanordnung zum Übertragen von Datensignalen zwischen Teilnehmerstellen eines Datennetzes.**

(30) Priorität : 25.03.83 DE 3311030

(43) Veröffentlichungstag der Anmeldung :
10.10.84 Patentblatt 84/41

(45) Bekanntmachung des Hinweises auf die Patenterteilung : 20.09.89 Patentblatt 89/38

(84) Benannte Vertragsstaaten :
AT BE CH DE FR GB IT LI NL SE

(56) Entgegenhaltungen :
DE–B– 1 295 591
US–A– 3 534 264
US–A– 3 902 165
TELCOM REPORT, Band 3, Nr. 6, 1980, Seiten 222-227, München, DE; R. LUEDER: "Kommunikationsdienste und Teilnehmertechnik im dienstintegrierten Digitalnetz"

(73) Patentinhaber : **Siemens Aktiengesellschaft**
**Wittelsbacherplatz 2**
**D-8000 München 2 (DE)**

(72) Erfinder : **Wedler, Hartmut, Dipl.-Ing.**
**Ludwig-Braille-Strasse 7**
**D-8000 München 70 (DE)**

## Beschreibung

Die Erfindung bezieht sich auf ein Verfahren und eine Schaltungsanordnung zum Übertragen von Datensignalen zwischen Teilnehmerstellen eines Datennetzes, an dem für die Abgabe und für die Aufnahme von Datensignalen mit unterschiedlichen Datensignalraten ausgelegte Teilnehmerstellen angeschlossen sind, wobei von einer rufenden Teilnehmerstelle im Zuge des Aufbaus einer Verbindung oder danach ein Informationssignal abgegeben wird, mit dem die für die von der rufenden Teilnehmerstelle aus gewünschte oder mögliche nominelle Datensignalrate bezeichnet wird.

Im Zusammenhang mit einem geplanten dienstintegrierten Digitalnetz (ISDN) ist es bereits bekannt (Zeitschrift « Telcom Report » 3 (1980), Heft 3, Seiten 222 bis 227, insbesondere Seite 225), den Teilnehmerstellen einer Vermittlungsanlage unterschiedliche Übertragungskapazitäten bereitzustellen, indem den betreffenden Teilnehmerstellen eine Mehrzahl von 64 kbit/s Übertragungskanälen zur Verfügung gestellt wird. In diesem Zusammenhang ist es jedoch nicht bekannt, wie Verbindungen zwischen derartigen Teilnehmerstellen herzustellen sind, wenn es darum geht, daß unterschiedliche Übertragungskapazitäten für die jeweilige Verbindung zur Auswahl stehen.

Es ist bereits ein Hochgeschwindigkeits-PCM-Datenübertragungssystem bekant (US-A-3 902 165), bei dem Datensignale zwischen Teilnehmerstellen übertragen werden, die für die Abgabe und Aufnahme von Datensignalen mit unterschiedlichen Datensignalraten ausgelegt sind, wobei von einer rufenden Teilnehmerstelle aus im Zuge des Aufbaus einer Verbindung bzw. danach ein Informationssignal abgegeben wird, mit dem die für die von der rufenden Teilnehmerstelle aus gewünschte oder mögliche nominelle Datensignalrate bezeichnet wird, auf die die anzurufende bzw. angerufene Teilnehmerstelle eingestellt wird. Dabei ist ferner vorgesehen, einen zentralen Prozessor über die jeweiligen Übertragungsraten zu informieren, dessen Informationen im Zuge eines Verbindungsaufbaus bezüglich der Übertragungsraten berücksichtigt werden. Die betreffenden Maßnahmen genügen jedoch nicht dazu, in einem Datennetz Verbindungen zwischen Teilnehmerstellen herstellen zu können und dabei die betreffenden Teilnehmerstellen allein für die Auswahl der Datensignalraten zu benutzen.

Der Erfindung liegt die Aufgabe zugrunde, einen Weg zu zeigen, wie in einem Datennetz Verbindungen zwischen Teilnehmerstellen hergestellt werden können, die für unterschiedliche Datensignalraten eingerichtet bzw. gerade in Verbindungen einbeziehbar sind.

Gelöst wird die vorstehend aufgezeigte Aufgabe bei einem Verfahren der eingangs genannten Art erfindungsgemäß dadurch, daß das genannte Informationssignal mit für die jeweils anzurufende bzw. angerufene Teilnehmerstelle vorhandenen Angaben über die Datensignalrate, mit der die betreffende anzurufende bzw. angerufene Teilnehmerstelle zu arbeiten vermag, verglichen wird, daß auf den Vergleich des Informationssignals mit den genannten Angaben hin in der anzurufenden bzw. angerufenen Teilnehmerstelle diejenige Datensignalrate eingestellt wird, welche in Anbetracht der durch das Informationssignal gegebenen Datensignalrate die höchste gemeinsame Datensignalrate für die miteinander zu verbindenden bzw. bereits verbundenen Teilnehmerstellen ist, und daß durch Übertragen eines Einstellsignals in der rufenden Teilnehmerstelle dieselbe Datensignalrate eingestellt wird, die für die anzurufende bzw. angerufene Teilnehmerstelle eingestellt worden ist.

Die Erfindung bringt den Vorteil mit sich, daß auf besonders einfache Weise erreicht ist, daß Datensignale auch zwischen solchen an dem erwähnten Datennetz angeschlossenen Teilnehmerstellen hergestellt werden können, deren nominellen Datensignalraten unterschiedlich, jedoch nicht höher als die Übertragungskapazität der Verbindungswege sind. Von Vorteil ist ferner, daß die Einstellung der für die jeweilige Verbindung maßgebenden Datensignalraten bzw. Übertragungsgeschwindigkeit zwischen den jeweils miteinander zu verbindenden bzw. verbundenen Teilnehmerstellen automatisch lediglich durch diese Teilnehmerstelle erfolgen kann, ohne daß dazu gesonderte Einstellvorgänge in vermittlungstechnischen oder übertragungstechnischen Einrichtungen auszuführen sind.

Vorzugsweise wird bei bereits vorliegender Einstellung der jeweils gerade maximal möglichen Datensignalrate in der jeweils anzurufenden bzw. angerufenen Teilnehmerstelle und Auftreten eines Informationssignals, welches eine Datensignalrate betrifft, die mindestens gleich der erstgenannten Datensignalrate ist, lediglich ein Einstellsignal zur Einstellung der erstgenannten Datensignalrate für die rufende Teilnehmerstelle abgegeben. Hierdurch ergibt sich der Vorteil eines besonders geringen Steuerungsaufwands für die erforderliche Einstellung der für die jeweilige Datensignalübertragung zu benutzenden Datensignalraten.

Zur Durchführung des Verfahrens gemäß der Erfindung ist es zweckmäßig, eine Schaltungsanordnung zu verwenden, die dadurch gekennzeichnet ist, daß jeder Teilnehmerstelle ein Fernschaltgerät zugehörig ist, mit dem die jeweilige Teilnehmerstelle an einer Übertragungsleitung angeschlossen ist, daß im Fernschaltgerät jeder Teilnehmerstelle Angaben darüber gespeichert sind, für welche nominelle maximale Datensignalrate die betreffende Teilnehmerstelle eingerichtet bzw. gerade betriebsbereit ist, daß ein in jedem Fernschaltgerät enthaltener Komparator die in diesem jeweils gespeicherten genannten Angaben mit einem von einer rufenden Teilnehmerstelle her zugeführten Informationssignal zu vergleichen gestattet, welches die von der betreffenden rufenden Teilnehmerstelle für eine Verbindung gerade geforderte oder gerade mögliche Datensignalrate bezeichnet, daß mit dem Komparator eine Einstelleinrichtung verbunden ist, in der nach Maßgabe des Ausgangssignals des Komparators in der zugehörigen Teilnehmerstelle diejenige Datensignalrate eingestellt wird, welche die größte gemeinsame Datensignalrate der durch das Informationssignal und durch die genannten Angaben bezeichneten Datensignalraten ist, und daß von der Einstelleinrichtung des Fernschaltgeräts der jeweiligen anzurufenden bzw. angerufenen Teilnehmerstelle entsprechende Einstellsignale an das Fernschaltgerät der jeweils rufenden Teilnehmerstelle abgebbar sind. Hierdurch ergibt sich der Vorteil eines besonders geringen schaltungstechnischen Aufwands, um für die in jeweils eine Verbindung einzubeziehenden bzw. einbezogenen Teilnehmerstellen die gemeinsam zu benutzende bzw. maximal mögliche Datensignalrate einzustellen.

Zweckmäßigerweise weist jedes Fernschaltgerät eine Taktauswahlschaltung auf, die Taktsignale entsprechend den verschiedenen Datensignalraten abzugeben gestattet und die von der zugehörigen Einstelleinrichtung für die Abgabe der der jeweils in Frage kommenden Datensignalrate entsprechenden Taktsignale einstellbar ist. Dies bringt den Vorteil mit sich, daß für die jeweils in Frage kommenden Datensignalraten die richtigen Taktsignale bereitgestellt werden können.

Vorzugsweise gibt die Taktauswahlschaltung in ihrer Ausgangsstellung Taktsignale entsprechend einer festgelegten Datensignalrate ab. Diese Maßnahme eröffnet in vorteilhafter Weise die Möglichkeit, die betreffende festgelegte Datensignalrate für die Übertragung von Signalisierungsinformationen heranzuziehen, die im Zuge des Aufbaus von Verbindungen zwischen Teilnehmerstellen zu übertragen sind und mit denen die Informationssignale übertragen werden können, welche die für die Datensignalübertragung jeweils gewünschten bzw. möglichen Datensignalraten betreffen.

Von Vorteil ist es ferner, wenn die Einstelleinrichtung jedes Fernschaltgeräts eine Bitratenanpassungseinrichtung aufweist, welche einen Ausgleich zwischen der bei der zugehörigen Teilnehmerstelle eingestellten Datensignalrate und einer auf einer mit der betreffenden Teilnehmerstelle verbundenen Übertragungsleitung maßgebenden höheren Datensignalrate bewirkt. Durch diese Maßnahme läßt sich ein taktgebundener Betrieb mit fester Taktfrequenz bei der Übertragung der Datensignale über Übertragungsleitungen erzielen.

Anhand einer Zeichnung wird die Erfindung nachstehend beispielsweise näher erläutert.

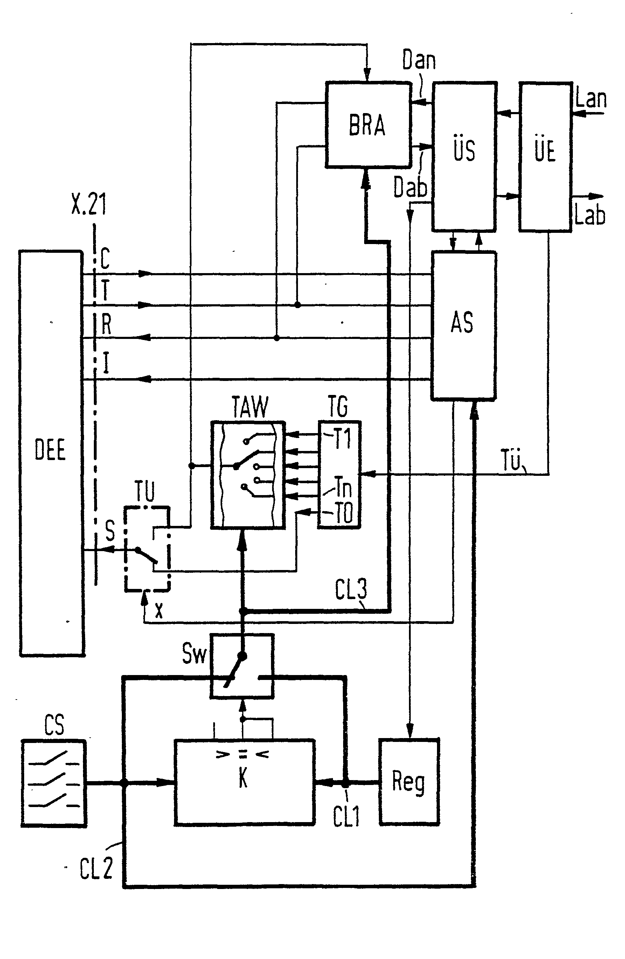

In der Zeichnung ist in einem Blockschaltbild eine Teilnehmerstelle mit einer Datenendeinrichtung DEE angedeutet, bei der es sich um ein Datenendgerät handeln mag, das über eine Schnittstelle gemäß CCITT-Empfehlung X.21 und eine Reihe von Schaltungseinrichtungen mit einer Übertragungsleitung verbunden ist, zu der eine Signale in ankommender Übertragungsrichtung übertragende Leitung Lan und eine Signale in abgehender Übertragungsrichtung übertragende Leitung Lab gehören. Die zwischen der Übertragungsleitung und dem Datenendgerät DEE liegenden Schaltungseinrichtungen bilden insgesamt ein Fernschaltgerät, welches im vorliegenden Fall u. a. zur automatischen Einstellung von Datensignalraten dient.

Das in der Zeichnung dargestellte Fernschaltgerät umfaßt unter anderem eine Ablaufsteuerung AS, die über Leitungen C, T, R und I mit dem Datenendgerät DEE verbunden ist. Bei der Leitung C handelt es sich um eine Steuerleitung, über die der Ablaufsteuerung erforderliche Steuersignale zugeführt werden. Die Leitung T ist eine Sendeleitung, über die der Ablaufsteuerung AS vom Datenendgerät DEE Signalisierungsinformationen zugeführt werden. Die Leitung R ist eine Empfangsleitung, über die dem Datenendgerät DEE von der Ablaufsteuerung AS Signalisierungsinformationen zugeführt werden können. Die Leitung I ist eine Steuerleitung, über die die Ablaufsteuerung AS an das Datenendgerät DEE Steuersignale abzugeben vermag.

Die Ablaufsteuerung AS, welche die jeweils erforderlichen Steuerungsvorgänge abwickelt, ist eingangs- und ausgangsseitig an einer Übertragungssteuerung ÜS angeschlossen, welche die Abwicklung von Übertragungsvorgängen steuert.

Die Übertragungssteuerung ÜS ist eingangs- und ausgangsseitig über eine Übertragungseinheit ÜE an der oben bereits erwähnten Übertragungsleitung angeschlossen, das heißt an den beiden Leitungen Lan und Lab. Die Übertragungseinheit ÜE dient im wesentlichen als Anpassungseinrichtung zwischen der Übertragungssteuerung ÜS und der Übertragungsleitung.

Die Übertragungssteuerung ÜS ist über eine Datensignale in ankommender Richtung weiterleitende Leitung Dan sowie über eine Datensignale in abgehender Übertragungsrichtung übertragende Leitung Dab mit einer Bitratenanpassungseinrichtung BRA verbunden, die eingangs- und ausgangsseitig ferner mit der Sendeleitung T und mit der Empfangsleitung R des Datenendgerätes DEE verbunden ist. Die Aufgabe dieser Bitratenanpassungseinrichtung BRA besteht darin, einen Ausgleich zwischen der in der zugehörigen Teilnehmerstelle bzw. beim zugehörigen Datenendgerät DEE benutzten Datensignalrate und der auf der Übertragungsleitung Lan, Lab maßgebenden Datensignalrate vorzunehmen, bezüglich der davon auszugehen ist, daß sie normalerweise fest vorgegeben und höher ist als die Datensignalrate, für die das betreffende Datenendgerät DEE ausgelegt ist.

Zu dem in der Zeichnung dargestellten Fernschaltgerät gehört ferner eine Taktauswahlschaltung TAW, die eingangsseitig mit einem Taktgenerator TG verbunden sein mag, der von verschiedenen Ausgängen T1 bis TN Taktsignale mit unterschiedlichen Taktraten abgibt, die an einen als Referenztakt dienenden Übertragungstakt (über die Leitung Tü zugeführt) gebunden sein können.

Von einem weiteren Ausgang To gibt der Taktgenerator TG Taktimpulse ab, die einer festgelegten Datensignalrate entsprechen, bei der es sich im vorliegenden Fall beispielsweise um eine Datensignalrate von 2,4 kbit/s handeln mag, mit der Signalisierungsinformationen von bzw. zu den einzelnen Teilnehmerstellen bzw. Datenendeinrichtungen übertragen werden.

Die Taktauswahlschaltung TAW, die schematisch als Wähler dargestellt ist, ist ausgangsseitig mit dem einen Eingangsanschluß eines zwei Eingangsanschlüsse und einen Ausgangsanschluß aufweisenden Umschalters TU verbunden, der mit seinem Ausgangsanschluß über eine Leitung S an dem zugehörigen Datenendgerät DEE angeschlossen ist, welchem über diese Leitung S die jeweils ausgewählten Taktimpulse zugeführt werden. Der Umschalter TU ist mit seinem anderen Eingangsanschluß an dem Ausgang To des Taktgenerators TG direkt angeschlossen. Mit einem Betätigungseingang ist der Umschalter TU über eine Steuerleitung X mit der oben erwähnten Ablaufsteuerung AS verbunden, welche den Umschalter TU aus seiner in der Zeichnung dargestellten normalen Schalterstellung dann in seine andere Schalterstellung umsteuert, wenn die Signalisierungsphase mit der Einstellung der ausgewählten Datenübertragungsrate abgeschlossen ist und nun vom Datenendgerät DEE gesendete Datensignale an die Bitratenanpassungseinrichtung BRA zu übergeben bzw. von dieser abgegebene Datensignale an das Datenendgerät DEE weiterzuleiten sind. Der Ausgang der Taktauswahlschaltung TAW ist dazu mit einem Takteingang der Bitratenanpassungseinrichtung BRA verbunden.

Die vorstehend betrachtete Taktauswahlschaltung TAW ist Bestandteil einer dem in der Zeichnung dargestellten Fernschaltgerät zugehörigen Einstelleinrichtung, zu der ferner ein Schalter Sw gehört, über dessen Ausgangsseite Einstellsignale für die Taktauswahlschaltung TAW und für die Bitratenanpassungseinrichtung BRA abgegeben werden. Der Umschalter Sw ist eingangsseitig am Ausgang eines Codierschalters CS bzw. am Ausgang eines Registers Reg angeschlossen. Mit den Ausgangsseiten des Codierschalters CS und des Registers Reg ist ein Komparator K verbunden, der die ihm von dem Register Reg über eine Leitung bzw. Leitungsgruppe CL1 zugeführten Signale mit den von dem Codierschalter CS über eine Leitung bzw. Leitungsgruppe CL2 zugeführten Signalenvergleicht, die binärkodierte Wertzuweisungen zu den durch sie zu kennzeichnenden Datensignalraten sein mögen. Die von dem Codierschalter CS abgegebenen Signale stellen insgesamt Angaben über die Datensignalrate bereit, mit der die zugehörige Teilnehmerstelle bzw. das zugehörige Datenendgerät zu arbeiten vermag. Diese Angaben vergleicht der Komparator K mit einem in dem Register Reg von der Übertragungssteuerung ÜS her gespeicherten Informationssignal, welches im Zuge des Aufbaus einer Verbindung bzw. nach bereits erfolgtem Aufbau einer Verbindung zu der in der Zeichnung dargestellten Teilnehmerstelle hin von einer anderen Teilnehmerstelle abgegeben worden ist, die als rufende Teilnehmerstelle betrachtet werden mag, und die in dem genannten Informationssignal Angaben über ihre eigene Datensignalrate bereitstellt. Der Komparator gibt von seinem mit < oder = bezeichneten Ausgängen dann ein bestimmtes Ausgangssignal ab, wenn der Wert des in dem Register Reg zwischengespeicherten Informationssignals mindestens gleich dem Wert der durch den Codierschalter CS bereitgestellten Angaben ist. In diesem Falle befindet sich der Umschalter Sw bei Auftreten dieses bestimmten Ausgangssignals in seiner aus der Zeichnung ersichtlichen Schalterstellung. In dieser Schalterstellung wird dann als gemeinsamer Taktsignalratenwert der durch den Codierschalter bezeichnete ausgewählt, wenn sich, wie angenommen, durch den Vergleich der Angaben mit dem erwähnten Informationssignal dieser Wert als gleich bzw. niedriger als vom fernen Fernschaltgerät gewünscht ergeben hat. Diese Groß wird in der betrachteten Schaltungsanordnung über den Umschalter Sw zur entsprechenden Einstellung der Taktauswahlschaltung TAW herangezogen. Die Taktauswahlschaltung TAW gibt auf ihre Einstellung hin ausgangsseitig ein Taktsignal mit einer Taktsignalrate ab, welche durch das zuvor erwähnte Vergleichsergebnis des durch den Komparator K durchgeführten Vergleichs gegeben ist. Mit anderen Worten ausgedrückt heißt dies, daß eine direkte Zuordnung zwischen der jeweils ausgewählten Taktsignalrate und der Datensignalrate erfolgt.

Die zur Einstellung der Taktauswahlschaltung TAW verwendete Größe wird ferner über eine Leitung bzw. Leitungsanordnung CL3 an die Bitratenanpassungsschaltung BRA abgegeben, der damit alle notwendigen Informationen zugeführt sind, um Datensignale mit der richtigen Datensignalrate zu bzw. von dem zugehörigen Datenendgerät DEE zu übertragen und im übrigen eine Anpassung zwischen dieser Datensignalrate und der demgegenüber normalerweise höheren Datensignalrate vorzunehmen, die auf der Übertragungsleitung Lan, Lab maßgebend ist.

Bezüglich des vorstehend betrachteten Registers Reg sei noch angemerkt, daß dieses mit seinem Registereingang am Ausgang der oben bereits betrachteten Übertragungssteuerung ÜS angeschlossen ist. Über diese Übertragungssteuerung ÜS wird dem Register Reg nur das jeweilige Informationssignal zugeführt, welches der betreffenden Übertragungssteuerung ÜS im Bitstrom der ganzen Signalisierungsinformation von der Übertragungsleitung her zugeführt worden ist.

Nachdem zuvor der Aufbau der in der Zeichnung dargestellten Schaltungsanordnung betrachtet worden ist, soll nunmehr die Arbeitsweise dieser Schaltungsanordnung näher betrachtet werden.

Zunächst sei davon ausgegangen, daß von einer rufenden Teilnehmerstelle mit dem in der Zeichnung gezeigten Aufbau aus eine Verbindung hergestellt werden soll zu einer anderen, entsprechend aufgebauten Teilnehmerstelle. Die erstgenannte Teilnehmerstelle wird als rufende Teilnehmerstelle bezeichnet, und die zweite Teilnehmerstelle wird als anzurufende Teilnehmerstelle bezeichnet.

Von der rufenden Teilnehmerstelle wird zunächst in einer Signalisierungsphase eine Signalisierungsinformation abgegeben, welche beispielsweise die Rufnummer der gewünschten anzurufenden Teilnehmerstelle enthält. Hierzu wird das Taktsignal vom Ausgang To des Taktgenerators TG benutzt, das sei ein Taktsignal mit einer Taktsignalrate von beispielsweise 2,4 kbit/s, um damit die entsprechende Signalisierungsinformation von dem Datenendgerät DEE zu übernehmen und weitergeleitet über die Ablaufsteuerung AS, z. B. in einen dafür reservierten Zeitschlitz der in der Art eines Multiplexers arbeitenden Übertragungssteuerung ÜS einzuführen. In der Signalisierungsphase wird ferner von der betreffenden rufenden Teilnehmerstelle ein Informationssignal abgegeben, welches die von der betreffenden rufenden Teilnehmerstelle aus gewünschte oder gerade mögliche nominelle Datensignalrate bezeichnet. Dieses Informationssignal kann entweder vom Endgerät DEE abgegeben oder auch automatisch aus der Stellung des zugehörigen Codierschalters CS abgeleitet werden, der über die Leitung bzw. Leitungsanordnung C die zugehörige Ablaufsteuerung AS entsprechend ansteuert, so daß das infrage kommende Informationssignal zu der anzurufenden bzw. bereits angerufenen Teilnehmerstelle hin übertragen wird.

In der anzurufenden bzw. angerufenen Teilnehmerstelle laufen nun folgende Funktionen ab. Das der betreffenden anzurufenden bzw. angerufenen Teilnehmerstelle zugeführte Informationssignal wird in dieser Teilnehmerstelle mit der dort vorhandenen Angabe bzw. mit den dort vorhandenen Angaben verglichen, die die Datensignalrate betrifft bzw. betreffen, mit der diese anzurufende bzw. angerufene Teilnehmerstelle zu arbeiten vermag. Als Ergebnis dieses Vergleichs wird dann in der betrachteten anzurufenden bzw. angerufenen Teilnehmerstelle diejenige Datensignalrate ausgewählt, welche die niedere (das ist die größte gemeinsam mögliche) Datensignalrate der praktisch miteinander verglichenen Datensignalraten ist. Die damit in der anzurufenden bzw. angerufenen Teilnehmerstelle ablaufenden Vorgänge entsprechen völlig den oben bereits im Zusammenhang mit der Erläuterung des Schaltungsaufbaus betrachteten Vorgängen.

Nach erfolgter Einstellung der Datensignalrate in der anzurufenden bzw. angerufenen Teilnehmerstelle ist dann gegebenenfalls noch eine Einstellung der Datensignalrate in der rufenden Teilnehmerstelle erforderlich. Dazu wird von der gerade betrachteten anrufenden bzw. angerufenen Teilnehmerstelle ein entsprechendes Informations- bzw. Einstellsignal zu der rufenden Teilnehmerstelle zurückübertragen. Sofern die in der anzurufenden bzw. angerufenen Teilnehmerstelle ausgewählte bzw. eingestellte Datensignalrate niedriger ist als die Datensignalrate, die von der rufenden Teilnehmerstelle zunächst als gewünschte oder mögliche nominelle Datensignalrate angegeben worden ist, erfolgt nunmehr in der betreffenden rufenden Teilnehmerstelle eine Einstellung auf die Datensignalrate, die in der anzurufenden bzw. angerufenen Teilnehmerstelle bereits eingestellt worden ist. In der rufenden Teilnehmerstelle laufen dabei dieselben Vorgänge ab, wie sie zuvor bezüglich der anzurufenden bzw. angerufenen Teilnehmerstelle erläutert worden sind.

Nach Abschluß der vorstehend erläuterten Vorgänge sind sowohl die anzurufende bzw. gerufene Teilnehmerstelle als auch die rufende Teilnehmerstelle auf ein und dieselbe Datensignalrate eingestellt. Bei dieser Datensignalrate handelt es sich um die jeweils gerade gemeinsame mögliche höchste effektive Datensignalrate, mit der die beiden Teilnehmerstellen im Augenblick miteinander in Datenübertragung treten können.

Durch Übertragung gesonderter Steuersignale, beispielsweise in Form von Polaritätswechseln, kann nach der erfolgten Einstellung der Datensignalraten schließlich signalisiert werden, daß mit der Datensignalübertragung begonnen werden kann. Dabei genügt es, wenn ein solches Signal beispielsweise von der rufenden Teilnehmerstelle aus an die angerufene Teilnehmerstelle abgegeben wird, nachdem von dieser letztgenannten Teilnehmerstelle an die rufende Teilnehmerstelle ein entsprechendes Informationssignal bzw. Einstellsignal bezüglich der Datensignalrate übertragen worden ist.

Abschließend sei noch angemerkt, daß bezüglich der Übertragung des eine Datensignalrate betreffenden Informationssignals von einer rufenden Teilnehmerstelle aus im vorstehenden angegeben worden ist, daß dieses Informationssignal zu einer anzurufenden bzw. angerufenen Teilnehmerstelle hin übertragen wird. Damit ist sowohl der Fall erfaßt, daß das betreffende Informationssignal im Zuge des Verbindungsaufbaus von einer rufenden Teilnehmerstelle zu einer anzurufenden Teilnehmerstelle hin übertragen wird, als auch der Fall, daß das betreffende Informationssignal nach bereits aufgebauter Verbindung zwischen einer ersten aktiven Teilnehmerstelle und einer zweiten, positiven Teilnehmerstelle übertragen wird. In beiden Fällen laufen sowohl in der anzurufenden Teilnehmerstelle als auch in der angerufenen Teilnehmerstelle einerseits und in der rufenden Teilnehmerstelle andererseits die gleichen Vorgänge ab, die oben erläutert worden sind.

## Patentansprüche

1. Verfahren zum Übertragen von Datensignalen zwischen Teilnehmerstellen eines Datennetzes, an dem für die Abgabe und für die Aufnahme von Datensignalen mit unterschiedlichen Datensignalraten ausgelegte Teilnehmerstellen angeschlossen sind, wobei von einer rufenden Teilnehmerstelle im Zuge des Aufbaus einer Verbindung oder danach ein Informationssignal abgegeben wird, mit dem die für die von der rufenden Teilnehmerstelle aus gewünschte oder mögliche nominelle Datensignalrate bezeichnet wird, dadurch gekennzeichnet, daß das betreffende Informationssignal mit für die jeweils anzurufende bzw. angerufene Teilnehmerstelle vorhandenen Angaben über die Datensignalrate, mit der die betreffende anzurufende bzw. angerufene Teilnehmerstelle zu arbeiten vermag, verglichen wird, daß auf den Vergleich des Informationssignals mit den genannten Angaben hin in der anzurufenden bzw. angerufenen Teilnehmerstelle diejenige Datensignalrate eingestellt wird, welche angesichts des Informationssignals und der genannten Angaben die höchste gemeinsame Datensignalrate für die miteinander zu verbindenden bzw. bereits verbundenen Teilnehmerstellen ist, und daß durch Übertragen eines Einstell- bzw. Informationssignals in der rufenden Teilnehmerstelle dieselbe Datensignalrate eingestellt wird, die für die anzurufende bzw. angerufene Teilnehmerstelle eingestellt worden ist.

2. Verfahren nach Anspruch 1, dadurch gekennzeichnet, daß bei bereits vorliegender Einstellung der jeweils gerade maximal möglichen Datensignalrate in der jeweils anzurufenden bzw. angerufenen Teilnehmerstelle und Auftreten eines Informationssignals, welches eine Datensignalrate betrifft, die mindestens gleich der erstgenannten Datensignalrate ist, lediglich ein Einstellsignal zur Einstellung der erstgenannten Datensignalrate für die rufende Teilnehmerstelle abgegeben wird.

3. Schaltungsanordnung zur Durchführung des Verfahrens nach Anspruch 1 oder 2, dadurch gekennzeichnet, daß jeder Teilnehmerstelle ein Fernschaltgerät zugehörig ist, über das eine Datenendeinrichtung (DEE) an einer Übertragungsleitung (Lan, Lab) angeschlossen ist, daß im Fernschaltgerät jeder Teilnehmerstelle Angaben darüber gespeichert sind, für welche nominelle maximale Datensignalrate die betreffende Teilnehmerstelle eingerichtet bzw. gerade betriebsbereit ist, daß ein in jedem Fernschaltgerät enthaltener Komparator (K) die in diesem jeweils gespeicherten genannten Angaben mit einem von einer rufenden Teilnehmerstelle her zugeführten Informationssignal zu vergleichen gestattet, welches die von der betreffenden rufenden Teilnehmerstelle für eine Verbindung gerade geforderte oder gerade mögliche Datensignalrate bezeichnet, daß der Komparator (K) einer Einstelleinrichtung zugehörig ist, in der nach Maßgabe des Ausgangssignals des Komparators (K) in der zugehörigen Teilnehmerstelle diejenige Datensignalrate eingestellt wird, welche die größte gemeinsame Datensignalrate der durch das Informationssignal und durch die genannten Angaben bezeichneten Datensignalraten ist, und daß von der Einstelleinrichtung (TAW, TG, TU, Sw, K, CS, Reg) des Fernschaltgerätes der jeweils anzurufenden bzw. angerufenen Teilnehmerstelle entsprechende Einstell- bzw. Informationssignale an das Fernschaltgerät der jeweils rufenden Teilnehmerstelle abgebbar sind.

4. Schaltungsanordnung nach Anspruch 3, dadurch gekennzeichnet, daß jedes Fernschaltgerät eine Taktauswahlschaltung (TAW) aufweist, die Taktsignale entsprechend den verschiedenen Taktsignalraten abzugeben gestattet und die von der zugehörigen Einstelleinrichtung für die Abgabe der der jeweils in Frage kommenden Datensignalrate entsprechenden Taktsignale einstellbar ist.

5. Schaltungsanordnung nach Anspruch 4, dadurch gekennzeichnet, daß die Taktauswahlschaltung (TAW) in ihrer Grundstellung Taktsignale (To) entsprechend einer festgelegten Datensignalrate für eine Signalisierungsphase abgibt.

6. Schaltungsanordnung nach einem der Ansprüche 3 bis 5, dadurch gekennzeichnet, daß mit der Einstelleinrichtung jedes Fernschaltgeräts eine Bitratenanpassungseinrichtung (BRA) verbunden ist, welche einen Ausgleich zwischen der bei der zugehörigen Teilnehmerstelle eingestellten Datensignalrate und einer auf einer mit der betreffenden Teilnehmerstelle verbundenen Übertragungsleitung (Lan, Lab) maßgebenden höheren Datensignalrate bewirkt.

## Claims

1. Method for the transmission of data signals between subscriber stations of a data network, to which subscriber stations designed for delivering and for receiving data signals having different data signal rates are connected, in which method an information signal, by means of which the nominal data signal rate possible or desired by the calling subscriber station is designated, is delivered by a calling subscriber station during the setting-up of a connection or thereafter, characterized in that the information signal concerned is compared with information, existing for the subscriber station to be called or called in each case, on the data signal rate with which the relevant subscriber station to be called or called can operate, in that, following the comparison of the information signal with the said information, the data signal rate which is the highest common data signal rate for the subscriber stations to be connected to one another or already connected in view of the information signal and the said information, is set in the subscriber station to be called or called, and in that, by transmitting a setting or information signal in the calling subscriber station, the same data signal rate is set which has been set for the subscriber station to be called or called.

2. Method according to Claim 1, characterized in that, with an already existing setting of the data signal rate which happens to be the maximum possible rate in each case in the subscriber station to be called or called in each case and occurrence of an information signal relating to a data signal rate which is at least equal to the first-mentioned data signal rate, only one setting signal for setting the first-mentioned data signal rate for the calling subscriber station is delivered.

3. Circuit arrangement for carrying out the method according to Claim 1 or 2, characterized in that each subscriber station is associated with a remote switching device via which a data terminal device (DEE) is connected to a transmission line (Lan, Lab), in that, in the remote switching device of each subscriber station information is stored on the nominal maximum data signal rate for which the relevant subscriber station is set up or happens to be operational, in that a comparator (K) contained in each remote switching device allows the said information stored in it in each case to be compared with an information signal supplied by a calling subscriber station, which information signal designates the data signal rate just requested by the relevant calling subscriber station for a connection or just possible, in that the comparator (K) belongs to a setting device in which the data signal rate which is the highest common data signal rate of the data signal rates designated by the information signal and by the said information is set in the associated subscriber station as determined by the output signal of the comparator (K), and in that setting or information signals can be delivered by the setting device (TAW, TG, TU, Sw, K, CS, Reg) of the remote switching device of the subscriber station to be called or called in each case to the remote switching device of the subscriber station calling in each case.

4. Circuit arrangement according to Claim 3, characterized in that each remote switching device exhibits a clock selection circuit (TAW) which allows clock signals to be delivered in accordance with the various clock signal rates and which can be set by the associated setting device for delivering the clock signals corresponding to the data signal rate concerned in each case.

5. Circuit arrangement according to Claim 4, characterized in that the clock selection circuit (TAW) delivers in its basic position clock signals (To) corresponding to a defined data signal rate for a signalling phase.

6. Circuit arrangement according to one of Claims 3 to 5, characterized in that a bit rate adaptation device (BRA), which causes an equalization between the data signal rate set at the associated subscriber station and a higher data signal rate which is determining on a transmission line (Lan, Lab) connected to the relevant subscriber station, is connected to the setting device of each remote switching device.

**Revendications**

1. Procédé pour transmettre des signaux de données entre des postes d'abonnés d'un réseau de transmission de données, auquel sont raccordés des postes d'abonnés agencés pour délivrer et recevoir des signaux de données à des cadences différentes de transmission, et selon lequel un poste d'abonné appelant envoie, au cours de l'établissement d'une liaison ou ultérieurement, un signal d'information qui désigne la cadence nominale de transmission des signaux de données désirée par le poste d'abonné appelant, ou possible, caractérisé par le fait que le signal d'information considéré est comparé à des indications qui sont présentes pour le poste d'abonné respectivement appelé ou devant être appelé et concernant la cadence de transmission des signaux de données, avec laquelle le poste d'abonné considéré, appelé ou devant être appelé, peut travailler, que lors de la comparaison du signal d'information auxdites indications, dans le poste d'abonné appelé ou devant être appelé se trouve alors réglée la cadence de transmission des signaux de données, qui, compte tenu du signal d'information et desdites indications, est la cadence commune la plus élevée de transmission des signaux de données pour les postes d'abonnés devant être reliés ou déjà reliés entre eux, et que, par suite de la transmission du signal de réglage ou d'information, la même cadence de transmission des signaux de données, que celle qui a été réglée pour le poste d'abonné appelé ou devant être appelé, est réglée dans le poste d'abonné appelant.

2. Procédé suivant la revendication 1, caractérisé par le fait que, dans le cas d'un réglage déjà existant de la cadence respective de transmission des signaux de données, qui est précisément la cadence maximale possible, dans le poste d'abonné respectif appelé ou devant être appelé, et lors de l'apparition d'un signal d'information concernant une cadence de transmission des signaux de données, au moins égale à la cadence de transmission des signaux de données, mentionnée en premier lieu, seul est délivré un signal de réglage servant à régler la cadence de transmission des signaux de données, mentionnée en premier lieu, pour le poste d'abonné appelant.

3. Montage pour la mise en œuvre du procédé suivant la revendication 1 ou 2, caractérisé par le fait qu'à chaque poste d'abonné est associé un appareil de télécommutation au moyen duquel un dispositif terminal (DE) de transmission de données est raccordé à une ligne de transmission (Lan, Lab), que dans l'appareil de télécommutation de chaque poste d'abonné se trouvent mémorisées des indications concernant la cadence nominale maximale de transmission des signaux de données, pour laquelle le poste d'abonné considéré est réglé ou avec laquelle il est précisément prêt à fonctionner, qu'un comparateur (K), présent dans chaque appareil de télécommutation, permet de comparer lesdites indications, mémorisées respectivement dans cet appareil, à un signal d'information, qui est envoyé par un poste d'abonné appelant et désigne la cadence de transmission des signaux de données, précisément requise par le poste d'abonné appelant considéré pour une liaison, ou précisément possible, que le comparateur (K) est associé à un dispositif de réglage dans lequel est réglée, en fonction du signal de sortie du comparateur (K), dans le poste d'abonné associé, la cadence de transmission des signaux de données, qui est la cadence commune maximale de transmission des signaux de données parmi les cadences de transmission de signaux de données, désignées par le signal d'information et par lesdites indications, et que des signaux correspondants de réglage ou d'information peuvent être envoyés, par le dispositif de réglage (TAW, TG, TU, Sw, K, SC, Reg) de l'appareil de télécommutation du poste d'abonné respectif appelé ou devant être appelé, à l'appareil de télécommutation du poste d'abonné respectivement appelant.

4. Montage suivant la revendication 3, caractérisé par le fait que chaque appareil de télécommutation comporte un circuit (TAW) de sélection de signaux d'horloge, qui permet de délivrer des signaux d'horloge en fonction des différentes cadences des signaux d'horloge et peut être réglé, par le dispositif de réglage associé, pour la délivrance des signaux d'horloge correspondant à la cadence respective considérée de transmission des signaux de données.

5. Montage suivant la revendication 4, caractérisé par le fait que le dispositif (TAW) de sélection de signaux d'horloge délivre, dans sa position de base, des signaux d'horloge (To) conformément à une cadence fixée de transmission des signaux de données, pour une phase de signalisation.

6. Montage suivant l'une des revendications 3 à 5, caractérisé par le fait qu'au dispositif de réglage de chaque appareil de télécommutation est relié un dispositif (BRA) d'adaptation des cadences binaires, qui réalise une compensation entre la cadence de transmission des signaux de données, réglée dans le poste d'abonné associé, et une cadence supérieure de transmission des signaux de données, qui est déterminante dans une ligne de transmission (Lan, Lab) reliée au poste d'abonné considéré.